# EUROPEAN PATENT APPLICATION

(11) **EP 1 302 857 A2**
(43) Date of publication of application: **16.04.2003**
(21) Application number: 02079502.7
(22) Date of filing: 09.10.2002
(51) Int. Cl.: G06F 11/27

(54) **Apparatus and method for an on-board trace recorder unit**

(30) Priority: 09.10.2001 US 327891 P
(71) Applicant: Texas Instruments Incorporated, Dallas, Texas 75251 (US)
(72) Inventor: Swoboda, Gary L., Sugar Land, TX 77479-2130 (US)
(74) Representative: Holt, Michael

(57) **Abstract**

The trace signals generated by target processor chip (323) under control of a host processing unit (20) are stored in trace recorder unit (325) that is fabricated on the same circuit board (32) as the target processor chip (323) itself. The signals stored in the trace recorder unit (325) can be applied to the communication bus (201) by the target processor chip (323) or by a separate integrated circuit processor (326) at the completion of the activity generating the trace. The separate integrated circuit processor (326) can begin transferring the signal stored in the trace recorder unit (325)prior to completion of the activity of the target processor unit (326).

## Description

This invention relates generally to digital signal processing units and, more particularly, to techniques for testing a digital signal processing unit.

### Background of the Invention

As the digital signal processing units have increased in component number and in flexibility, the testing of these units has become increasingly sophisticated and complex. One of the techniques for testing digital signal processing units and/or the processor cores has been to collect and analyze trace signals. The trace signals are signals gathered from at least a portion of the digital signal processing unit under test during the operation of the processing unit. The trace signals allow the reconstruction of the state of the portion of the processing unit under test and, consequently, a determination can be made whether the operation of the processing unit is correct. For example, the trace signals being collected may include the logic state of each conductor of a bus component. The trace signal testing procedure can be contrasted with the testing procedure wherein the processing unit performs a known activity and the result of the activity is compared to the expected result. As the processing units have become more complex, the ability to determine the origin of an error condition form an activity result has become more difficult and is frequently ambiguous even when the test activity is implemented with great ingenuity.

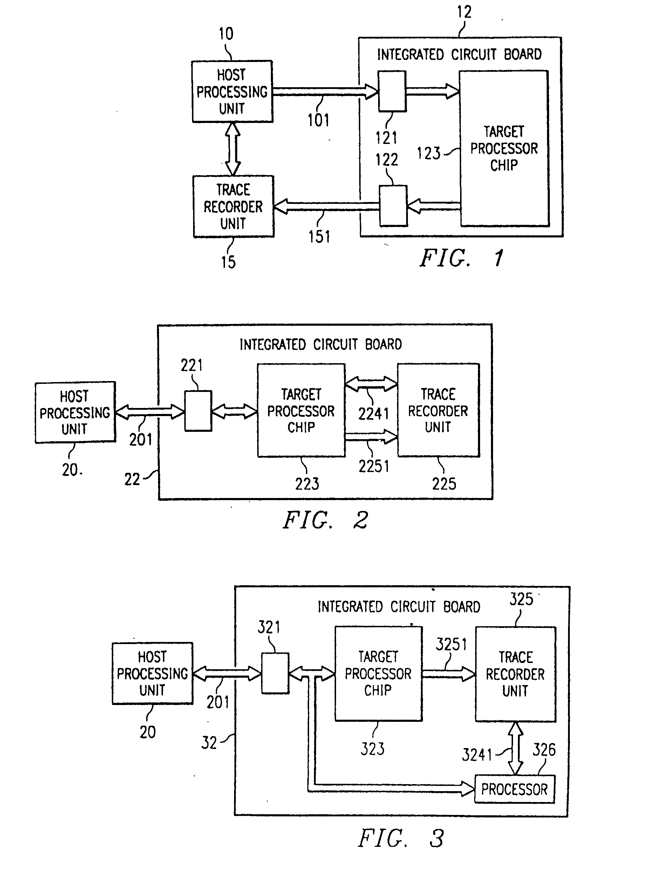

Referring to Fig. 1, a block diagram of a trace testing system, according to the prior art, is shown. Host processing unit 10 is coupled, by communication bus 101, to a connector 121 on the integrated circuit board 12. Connector 121 is coupled, by a bus forming part of the integrated circuit board, to the target processor chip 123. The trace signals from the target processor chip 123 are applied to the connector 122. The connector 122 is coupled to the trace recorder unit 15 by a data bus 151. The trace recorder unit 15 exchanges signals with the host processing unit 10.

The operation of this trace signal testing system can be understood as follows. The host processing unit 10 applies signals to the target processor chip 123 that result in a preselected activity. As the target processor chip 123 performs the preselected activity, the trace signals are applied to the trace recorder unit 15. The trace signals resulting from the preselected activity are transferred from the trace recorder unit 15 to the host processing unit 10. In the host processing unit 10, the trace signals are compared to expected trace signals to determine the accuracy of the operation. The host processing unit 10 can include an emulator unit. Data is transferred relatively slowly over the communication bus 101. The trace data being generated every clock cycle, must be transferred over the data bus 151 at a greater speed than the data transferred over the communication bus.

While the operation of the foregoing trace signal testing system is fairly straightforward when the test/debug operation involves the prototype hardware/software development. However, several problems in the utilization of the system are found in situations, such as with software application test/debug that are performed at locations other than those involved in the original development. In the test/debug of software programs, the software designer must have access not only to a host processor unit 10, but also to a trace recording unit 15. The presence of the trace recording unit 15 has further difficulties involved in the coupling of the trace recording unit 15 with the target processor chip 123 over the data bus 151. For example, as the complexity of the target processor chip 123 has increased, the number of trace signals (i.e., needed to specify the state of the target processor chip 123) has also increased. Therefore, the connector 122 and the bus 151 must have provision for a multiplicity of parallel, high speed conducting paths. As the number of trace signals increases, the size and difficulty in manufacture of the data bus 151 have become significant problems. The transmission of the multiplicity of high frequency trace signals provides significant problems in insuring the accurate identification of the trace signals. The data bus 151 and the connector 122 are specialized components with little usefulness aside from the test/debug process.

A need has therefore been felt for apparatus and an associated method having the feature that an improved trace signal testing system is implemented. It would be another feature of the apparatus and associated method to eliminate the need for an independent trace recorder unit. It would be yet another feature of the apparatus and associated method to improve the accuracy of the transmission of the trace signals from the target processor component to the trace recorder unit. It would be yet another feature of the apparatus and method to reduce the distance between the target processor unit and the trace recording unit. It would be still further feature of the present invention to eliminate the need for the multi-path, high speed data bus coupling the trace recording unit and a target processor chip.

### Summary of the Invention

The aforementioned and other features are accomplished, according to the present invention, by fabricating a trace recorder unit on the same integrated circuit board that includes the target processor chip and associated apparatus. The trace recorder unit is coupled to the target processing chip by an integrated circuit bus over which the trace signals are transmitted. The trace recording unit is also coupled to the system bus. In this manner, the transmission of the trace signals through a connector and a dedicated bus to reach an external trace recording unit is eliminated. According to one embodiment, after the activity of the target processor chip, activity for which the trace signals are required, is complete, the target processing chip can format and transmit the trace signals to the host processing unit for analysis over the communication bus. According to a second embodiment, a second processor can be fabricated on the integrated circuit board. This second processor can be used to transfer the data from the trace recording unit to the host processing unit.

Other features and advantages of present invention will be more clearly understood upon reading of the following description and the accompanying drawings and the claims.

### Brief Description of the Drawings

Figure 1 is a block diagram of a trace signal testing system according to the prior art.
Figure 2 is a block diagram of a trace signal testing system according to a first embodiment of the present invention.
Figure 3 is block diagram of a trace signal testing system according to a second of the present invention.

### Description of the Preferred Embodiment

### 1. Detailed Description of the Figures

Fig. 1 has been described in relationship to the prior art.

Referring to Fig. 2, a block diagram of a trace signal testing system, according to the present invention, is shown. The host processing unit 20 is coupled to a connector 221 by a communication bus 201. The connector 221 is mounted on an integrated circuit board 22. The exchange of signals between a target processor chip 223 and the host processing unit 20 is implemented by the bus 201 and the connector 221. The target processor chip 223 applies trace signals to the trace recorder unit 225 over bus 2251. The target processor chip 223 is receives signals from the trace recorder unit 225 bus 2241.

Referring to Fig. 3, a block diagram of a second embodiment of a trace signal testing system, according to the present invention, is shown. The host processing unit 20 is coupled to connector 321 on circuit board 32. The connector 321 is coupled to the target processor chip 323. The target processor chip 323 applies trace signals to trace recorder unit 326. Trace recorder unit 326 is coupled to connector 321.

### 2. Operation of the Preferred Embodiment

The operation of the trace recording system shown in Fig. 2 can be understood as follows. The host processing unit 20 applies activity signals to the bus 201 that are transmitted through the connector 221 and applied to the target processor unit 223. The application of the activity signals to the target processor chip 223 results in a preselected activity of the target processor chip 223. During the preselected activity of the target processor chip 223, trace signals are transmitted to the trace recorder unit 225 over bus 2251. Once the preselected activity has ended, the trace signals stored in the trace recording unit 225 are transferred to the target processor chip 223 by bus 2241. The processor can reformat the signals from the trace recorder unit 225 so that the trace signals can be transferred over the communication bus 201.

The operation of the trace recording system shown in Fig. 3 is similar to that shown in Fig. 2. The target processor chip 323 stores the trace signal in the trace recorder unit 325 by means of bus 3251. However, rather than use the target processor chip 323 to transfer the trace data to the host processing unit 20, the trace data is transferred to a second processor 326 by bus 3241. The data is reformatted so that the data can be transferred by the second processor 326 over the communication bus 201.

The present invention provides several advantages. The trace signals are not comprised by transmission to an external trace recording unit 15. In fact, the need for the specialized bus 151 and connector 122 is eliminated. Specialized bus 151 has the requirement that the number of conducting path on the bus 151 must be large enough to transmit all of the trace signals simultaneously. In the present invention, the trace data can be retrieved from the trace recording unit 225/325 and transmitted to the host processing unit 20 over the standard communication bus 201. Furthermore, because the trace signals are transmitted to the trace recorder unit 225 over an integrated circuit bus 225, less chance is available for compromise of the trace signals. The requirement of the trace recording unit is that the trace signals are stored through one trace recorder port (coupled to bus 2251/3251) and retrieved through a second trace recorder port (coupled to bus 2241/3241). As will be clear, the use of a separate integrated circuit processor 326 permits the transfer of the of signals stored in the trace recording unit 325 prior to the completion of the target processor chip activity for which the trace signals are being collected.

While the invention has been described with respect to the embodiments set forth above, the invention is not necessarily limited to these embodiments. Accordingly, other embodiments, variations, and improvements not described herein are not necessarily excluded from the scope of the invention, the scope of the invention being defined by the following claims.

## Claims

1. An integrated circuit board comprising:
a target processing unit, the target processor chip performing processing operations in response to instructions; and
a trace recorder unit coupled to the target processor chip, the trace recorder unit storing test signals generated by the target processing unit.

2. The integrated circuit board as recited in claim 1 wherein the instructions are generated by a host processing unit, the target processing unit transferring the test signals to the host processing unit.

3. The integrated circuit board as recited in claim 1 or claim 2, further comprising a second processor, the second processor coupled to the trace recording unit, the second processor retrieving test signals from the trace recording unit.

4. The integrated circuit board as recited in claim 3 wherein the instructions are generated by a host processing unit, the second processor transferring the test signals to the host processing unit.

5. The integrated circuit board as recited in claim 4 wherein the integrated circuit board is coupled to the host processing unit by a communication bus, the instructions from the host processor unit transferred to the target processor chip by the communication bus, the test signals transferred from the second processor to the host processing unit by the communication bus.

6. A method of testing a target processor chip on an integrated circuit board, the method comprising:
storing the trace signals from the target processor chip in the trace recording unit fabricated on the integrated circuit board.

7. The method as recited in claim 6 further comprising transferring the test signals in the trace recorder unit to the host processing unit by a second processor fabricated on the integrated circuit board.

8. A system for testing a target processor unit fabricated on an integrated circuit board, the system comprising:
a host processing unit, the host processing unit applying signals to the target processing unit that control the activity thereof;
a communication bus coupling the host processing unit and the target processing unit; and
a trace recorder unit fabricated on the integrated circuit board, the trace recording unit coupled to the target processor unit, the trace recorder unit storing trace signals generated by the target processor unit activity; the trace signals stored in the trace recording unit being transferred to the host processor unit.

9. The system as recited in claim 8 wherein the trace signals are transferred to the host processing unit by the target processor unit over the communication bus.

10. The system as recited in claim 8 or claim 9, wherein comprising a second processor fabricated on the integrated circuit board, the second processor coupled to the trace recording unit and the communication bus, the second processing unit transferring the trace signals from the trace recording unit to the host processing unit.
